# EUROPÄISCHE PATENTSCHRIFT

(11) **EP 3 875 790 B1**
(45) Veröffentlichungstag und Bekanntmachung des Hinweises auf die Patenterteilung: **26.11.2025**
(21) Anmeldenummer: 21020114.1
(22) Anmeldetag: 02.03.2021
(51) Int. Cl.: F16B 25/00

(54) **SCHRAUBE**
SCREW
VIS

(30) Priorität: 06.03.2020 DE 102020106119
(43) Veröffentlichungstag der Anmeldung: 08.09.2021
(73) Patentinhaber: Weippert, Günter, 74613 Öhringen (DE)
(72) Erfinder: Weippert, Günter, 74613 Öhringen (DE)
(74) Vertreter: Patentanwälte Schuster, Müller & Partner mbB

(56) Entgegenhaltungen:
- EP-A1- 0 104 552
- EP-A2- 0 713 017
- CN-B- 102 278 348
- DE-A1- 4 016 724
- DE-B3- 102004 011 668
- US-B2- 6 565 302

## Beschreibung

### Stand der Technik

Die Erfindung geht aus von einer Schraube, nach der Gattung des Anspruchs 1.

Schrauben, die in der Regel einen zylindrischen oder leicht kegeligen (konischen) Körper aufweisen und deren Oberfläche mindestens ein Gewinde aufweist, gehören in den unterschiedlichsten Ausgestaltungen schon seit langem zum Stand der Technik. So gibt es insbesondere Metallschrauben, deren Schaft und die Kontur des Gewindes zylindrisch ausgestaltet sind, um sie in ein passendes Gegengewinde einzuschrauben, Holzschrauben, deren mit Gewinde versehener Schaftteil spitz endet, wobei deren Gewindeflanken spitzer als die von Metallschrauben sind, wodurch das Gewinde im Gegenstück mittels der Schraube selbst bei der Montage eingeschnitten wird, und Spanplattenschrauben, die mit zylindrischer Kontur und spitzen Flanken zum Einschrauben insbesondere in Spanplatten, Gipskartonplatten oder Dübel geeignet sind.

Die unterschiedlichen Schrauben, die unterschiedlich lang sein können, bestehen meist aus Metall, Legierungen, wie Messing oder andere Buntmetalllegierungen, Nichteisenmetalle, wie Kupfer, Aluminium oder Titan, Holz, Faserverbundwerkstoff oder Kunststoff. Oftmals weisen Schrauben einen Schraubenkopf auf, wobei sich durch die Ausgestaltung des Randes des Schraubenkopfes, der insbesondere rund, vielkantig (z.B. viereckig, sechseckig) oder geriffelt sein kann, der Oberseite des Schraubenkopfes, die insbesondere eben, eben-gerundet, kugelig (maximal halbkugelig) oder kegelig sein kann, der Unterseite des Schraubenkopfes, die insbesondere flach oder kegelig (Senkkopf) sein kann, der Kopfhöhe des Schraubenkopfes und dem Außendurchmesser des Schraubenkopfes eine Vielzahl von Schraubenkopfformen ergibt. Zudem weist der Schraubenkopf in der Regel auch einen Kopfantrieb zum Ansatz eines Schraubendrehers oder eines Schraubenschlüssels auf. Bekannte Profile von Kopfantrieben sind der Schlitzkopf, Kreuzschlitz, Außen-Sechskant, Außen-Vierkant, Innen-Sechskant, Innen-Sechsrund z.B. mit fünf oder sechs Spitzen, Innen-Vielzahn oder Innen-Vierkant.

Die Flanken des Schraubengewindes bilden mit dem Gegengewinde eine senkrecht zu den Flanken wirkende formschlüssige Verbindung. Durch Einschrauben der Schraube entsteht eine in Normalenrichtung zwischen den einander zugekehrten Flankenflächen wirkende Kraft N und infolge der Reibung zwischen beiden ein Kraftschluss gegen das Drehen. Nachteilig ist aber, dass oftmals der bestehende Kraftschluss gegen Losdrehen nicht ausreichend ist, wodurch sich die Verbindung wieder löst.

Um diesen Nachteil zu überwinden, sind aus dem chinesischen Patent CN 102 278 348 B, aus den europäischen Patentanmeldungen EP 0 104 552 A1 und EP 0 713 017 A2, dem US-amerikanischen Patent US 6 565 302 B2, dem deutschen Patent DE 10 2004 011 668 B3 und der deutschen Patentanmeldung DE 10 16 724 A1 Schrauben vorbekannt, die sich durch eine besondere Ausgestaltung des Gewindes auszeichnen. Trotzdem ist oftmals der bestehende Kraftschluss gegen Losdrehen immer noch nicht ausreichend, wodurch sich die Verbindung wieder löst.

Aufgabe der Erfindung ist es daher eine Schraube, bereitzustellen, durch die die Nachteile des Standes der Technik überwunden werden.

### Die Erfindung und ihre Vorteile

Die erfindungsgemäße Schraube, mit den Merkmalen des Anspruchs 1, die einen eine Längsachse aufweisenden Schaft, der ein erstes Ende und ein zweites Ende aufweist, wobei der Schaft zumindest teilweise mindestens ein Gewinde aufweist, wobei das Gewinde einen Gewindegang aufweist, der einen Gewindeberg, ein Gewindetal, eine durch den Gewindeberg und das Gewindetal resultierende Gewindetiefe, eine dem ersten Ende des Schaftes zugewandte Flanke und eine dem ersten Ende des Schaftes abgewandte Flanke aufweist, wobei eine dem ersten Ende des Schaftes zugewandte Flanke vom Gewindetal bis zum Gewindeberg zwei unterschiedliche zwischen der Längsachse und der Flanke eingeschlossene Winkel (Innenwinkel) aufweist, wobei der am Gewindeberg eingeschlossener Winkel ein rechter Winkel ist, und eine dem ersten Ende des Schaftes abgewandte Flanke vom Gewindetal bis zum Gewindeberg zwei unterschiedliche zwischen der Längsachse und der Flanke eingeschlossene Winkel (Innenwinkel) aufweist, wobei der im Gewindetal eingeschlossene Winkel einer dem ersten Ende des Schaftes zugewandten Flanke flacher ist als der am Gewindeberg eingeschlossene Winkel und der im Gewindetal eingeschlossene Winkel einer dem ersten Ende des Schaftes abgewandten Flanke flacher ist als der am Gewindeberg eingeschlossene Winkel, und der im Gewindetal eingeschlossene Winkel einer dem ersten Ende des Schaftes abgewandten Flanke flacher ist als der am Gewindeberg eingeschlossene Winkel und der Gewindeberg mindestens eine Spitze aufweist, haben demgegenüber den Vorteil, dass ein leichtes Eindrehen der erfindungsgemäßen Schraube in ein Gegenstück möglich wird und eine Selbsthemmung ein Losdrehen der erfindungsgemäßen Schraube verhindert. Durch die mindestens zwei unterschiedlichen eingeschlossenen Winkel wird ein besserer Kraftschluss bewirkt, wodurch die Verbindung insbesondere durch die optimierte Spannungsverteilung stabiler wird.

Nach einer vorteilhaften Ausgestaltung der erfindungsgemäßen Schraube beträgt der eingeschlossene Winkel einer Flanke im Gewindetal höchstens 60° und am Gewindeberg mindestens 61°.

Nach einer zusätzlichen vorteilhaften Ausgestaltung der erfindungsgemäßen Schraube weist das erste Ende des Schaftes einen Kopf (Schraubenkopf) auf.

Nach einer diesbezüglichen vorteilhaften Ausgestaltung der erfindungsgemäßen Schraube weist der Kopf einen Kopfantrieb auf.

Nach einer zusätzlichen vorteilhaften Ausgestaltung der erfindungsgemäßen Schraube weist der Kopf einen Kragen auf.

Nach einer zusätzlichen vorteilhaften Ausgestaltung der erfindungsgemäßen Schraube weist das zweite Ende des Schaftes einen Spitze, eine Zentrierungsschräge oder einen Zapfen auf.

Nach einer zusätzlichen vorteilhaften Ausgestaltung der erfindungsgemäßen Schraube weist mindestens ein Gewinde eine Steigung zwischen 1,0 mm bis 4,0 mm, bevorzugt zwischen 1,5 mm bis 2,5 mm, auf.

Nach einer zusätzlichen vorteilhaften Ausgestaltung der erfindungsgemäßen Schraube weist der Gewindeberg mindestens eine Spitze und mindestens ein Plateau auf.

Nach einer zusätzlichen vorteilhaften Ausgestaltung der erfindungsgemäßen Schraube weist die dem ersten Ende des Schaftes zugewandte Flanke am Gewindeberg eine Fläche auf, die an einem Übergang in eine talseits angeordnete Fläche übergeht, und/oder weist die dem ersten Ende des Schaftes abgewandte Flanke am Gewindeberg eine Fläche auf, die an einem Übergang in eine talseits angeordnete Fläche übergeht.

Nach einer diesbezüglichen vorteilhaften Ausgestaltung der erfindungsgemäßen Schraube ist der Übergang an der dem ersten Ende des Schaftes zugewandten Flanke in einer Höhe angeordnet, die maximal zwei Drittel einer durch das Gewindetal und den Gewindeberg resultierende Gewindehöhe beträgt, und/oder ist der Übergang an der dem ersten Ende des Schaftes abgewandten Flanke in einer Höhe angeordnet, die maximal zwei Drittel einer durch das Gewindetal und den Gewindeberg resultierende Gewindehöhe beträgt.

Nach einer diesbezüglichen vorteilhaften Ausgestaltung der erfindungsgemäßen Schraube ist der Übergang an der dem ersten Ende des Schaftes zugewandten Flanke höher angeordnet ist als der Übergang an der dem ersten Ende des Schaftes abgewandten Flanke. Denkbar ist aber auch, dass der Übergang an der dem ersten Ende des Schaftes zugewandten Flanke in einer selben Höhe angeordnet ist, wie der Übergang an der dem ersten Ende des Schaftes abgewandten Flanke.

Nach einer diesbezüglichen vorteilhaften Ausgestaltung der erfindungsgemäßen Schraube ist die Schraube aus Kunststoff.

Nach einer zusätzlichen vorteilhaften Ausgestaltung der erfindungsgemäßen Schraube ist die Schraube eine selbstschneidende Schraube und/oder eine selbstfurchende Schraube. Dies hat den Vorteil, dass am Gegenstück, welches beispielsweise aus Kunststoff ist, kein Gewinde angeordnet sein muss, wodurch sich die Herstellungskosten senken, da am Gegenstück entweder gar keine Öffnung oder allenfalls nur eine Öffnung vorbereitet sein muss. Es kommt also zu einer Kosteneinsparung bei den Fertigungskosten und den Werkzeugkostensenkung, da der Arbeitsgang des Gewindeformens im Gegenstück entfällt.

Weitere Vorteile und vorteilhafte Ausgestaltung der Erfindung sind der nachfolgenden Beschreibung, der Zeichnung und den Ansprüchen entnehmbar.

### Zeichnungen

Bevorzugte Ausführungsbeispiele des erfindungsgemäßen Gegenstands sind in den Zeichnungen dargestellt und werden im Folgenden näher erläutert. Es zeigen
- Fig. 1: eine Seitenansicht auf eine Schraube nach Stand der Technik,
- Fig. 2: eine Schnittansicht der Schraube entlang der Linie A - A aus Fig. 1,
- Fig. 3: ein Detailausschnitt B der Schraube aus Fig. 2,
- Fig. 4: eine Aufsicht auf einen Schraubenkopf der Schraube, gemäß Fig. 1,
- Fig. 5: eine perspektivische Ansicht auf eine weitere Schraube nach Stand der Technik,
- Fig. 6: eine Seitenansicht auf die Schraube, gemäß Fig. 5,
- Fig. 7: eine Schnittansicht der Schraube entlang der Linie A - A aus Fig. 6,
- Fig. 8: ein Detailausschnitt B der Schraube aus Fig. 6,
- Fig. 9: eine Aufsicht auf einen Schraubenkopf der Schraube, gemäß Fig. 5,
- Fig. 10: eine perspektivische Ansicht auf eine weitere Schraube nach Stand der Technik,
- Fig. 11: eine Seitenansicht auf die Schraube, gemäß Fig. 10,
- Fig. 12: eine Schnittansicht der Schraube entlang der Linie A - A aus Fig. 11,
- Fig. 13: ein Detailausschnitt B der Schraube aus Fig. 12,
- Fig. 14: eine Aufsicht auf einen Schraubenkopf der Schraube, gemäß Fig. 10,
- Fig. 15: eine Seitenansicht auf eine weitere Schraube nach Stand der Technik,
- Fig. 16: eine Skizze eines Ausführungsbeispiels eines Zahnflankenprofils nach Stand der Technik,
- Fig. 17: eine Skizze des Ausführungsbeispiels eines Zahnflankenprofils, gemäß Fig. 16,
- Fig. 18: eine Skizze eines weiteren Ausführungsbeispiels eines Zahnflankenprofils nach Stand der Technik,
- Fig. 19: eine Skizze eines weiteren Ausführungsbeispiels eines Zahnflankenprofils und
- Fig. 20: eine Skizze des Ausführungsbeispiels eines Zahnflankenprofils, gemäß Fig. 19.

### Beschreibung der Ausführungsbeispiele

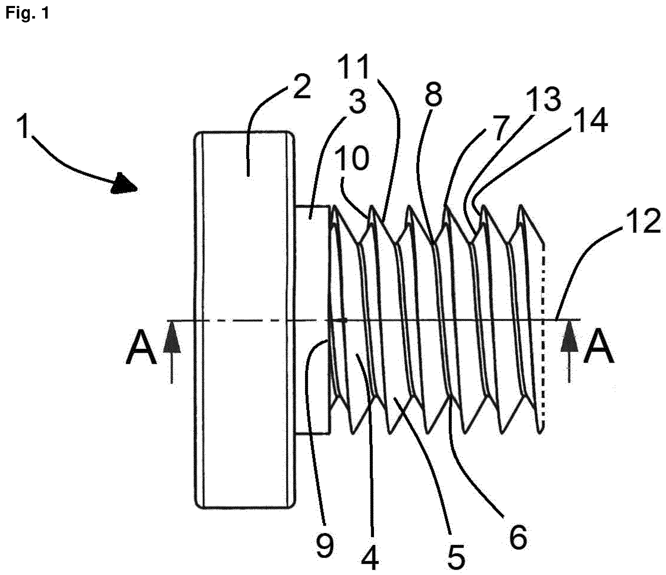

Fig. 1 zeigt eine Seitenansicht auf eine Schraube 1 nach Stand der Technik. Die Schraube 1 weist einen Schraubenkopf 2 (Kopf), der einen Kragen 3 aufweist, und einen Schaft 4, der ein Gewinde 5 aufweist und, der durch die gestrichelte Linie angedeutet, nur teilweise dargestellt ist, auf. Das Gewinde 5 weist einen Gewindegang 6 auf, der einen Gewindeberg 7, ein Gewindetal 8, eine durch den Gewindeberg 7 und das Gewindetal 8 resultierende Gewindetiefe, eine dem ersten Ende 9 des Schaftes 4 zugewandte Flanke 10 und eine dem ersten Ende 9 des Schaftes 4 abgewandte Flanke 11 aufweist. Die in Fig. 1 dargestellte erfindungsgemäße Schraube 1, die eine Längsachse 12 aufweist, weist eine dem ersten Ende 9 des Schaftes 4 zugewandten Flanke 10 auf, die sich vom Gewindetal bis zum Gewindeberg durch zwei unterschiedliche eingeschlossene Winkel, nämlich einen flacheren eingeschlossenen Winkel 13 und einen steileren eingeschlossene Winkel 14, auszeichnet.

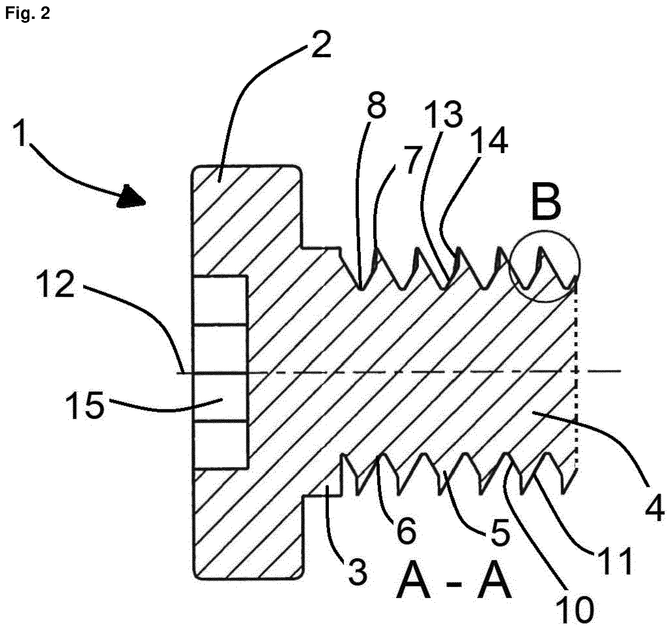

Fig. 2 zeigt eine Schnittansicht der Schraube 1 entlang der Linie A - A aus Fig. 1. Der Schraubenkopf 2 weist einen Kopfantrieb 15 zum Ansatz eines Schraubendrehers auf. Selbstverständlich kann der Schraubenkopf 2, sofern er vorhanden ist, und/oder der Kragen 3, sofern er vorhanden ist, unterschiedliche Formen aufweisen. Denkbar sind Abschrägungen, wodurch z.B. eine Senkschraube entsteht.

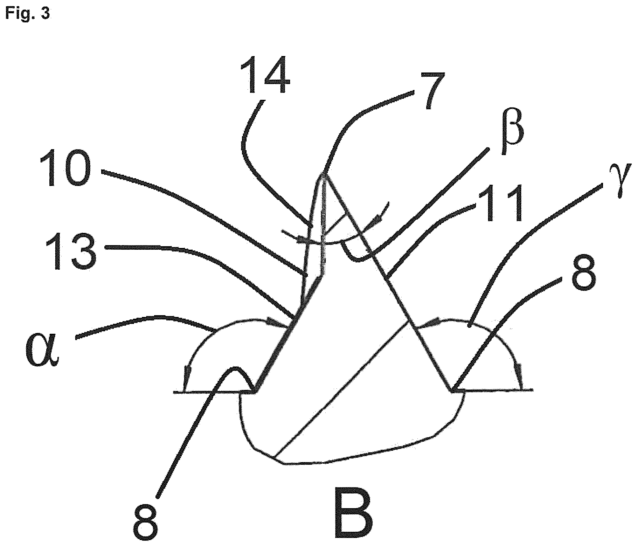

Fig. 3 zeigt ein Detailausschnitt B der Schraube 1 aus Fig. 2. Die mit den Pfeilen dargestellten Winkel sind beispielhaft zu verstehen und können selbstverständlich variiert werden. Beispielsweise könnte Winkel α 120°, Winkel β 31° und Winkel Y 120° betragen. Der im Gewindetal 8 zwischen der Längsachse und der Flanke 10 eingeschlossene Winkel einer dem ersten Ende 9 des Schaftes 4 zugewandten Flanke 10 würde sich in diesem Beispiel auf 60° (= 180° - Winkel α) berechnen. Der zwischen der Längsachse und der Flanke 11 eingeschlossene Winkel würde sich in diesem Beispiel auf 60° (= 180° - Winkel Y) berechnen.

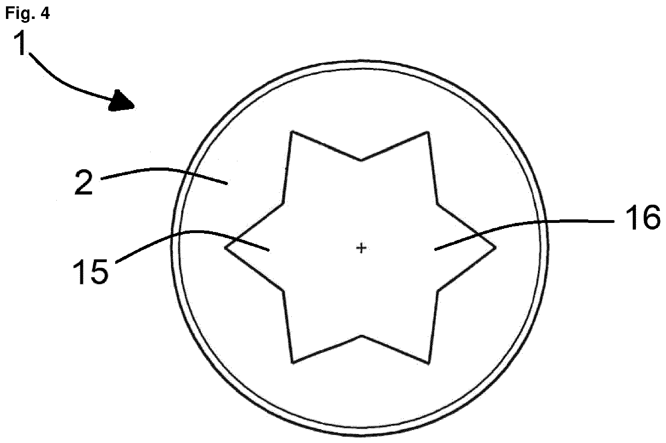

Fig. 4 zeigt eine Aufsicht auf einen Schraubenkopf 2 der Schraube 1, gemäß Fig. 1. Der Kopfantrieb 15 ist beispielhaft als Innensechsrund 16 ausgestaltet.

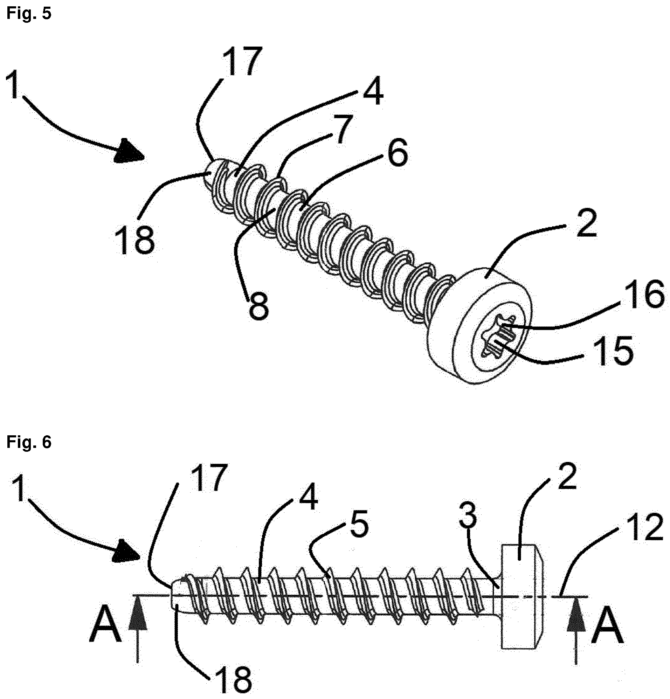

Fig. 5 zeigt eine perspektivische Ansicht auf eine weitere Schraube 1 nach Stand der Technik. Der Schaft 4 weist ein zweites Ende 17 in Form einer Zentrierungsschräge 18 auf. Es wäre auch denkbar, dass das zweite Ende 17 als Spitze oder Zapfen ausgestaltet ist.

Fig. 6 zeigt eine Seitenansicht auf die Schraube 1, gemäß Fig. 5. Der Kragen 3 ist hierbei leicht abgeschrägt.

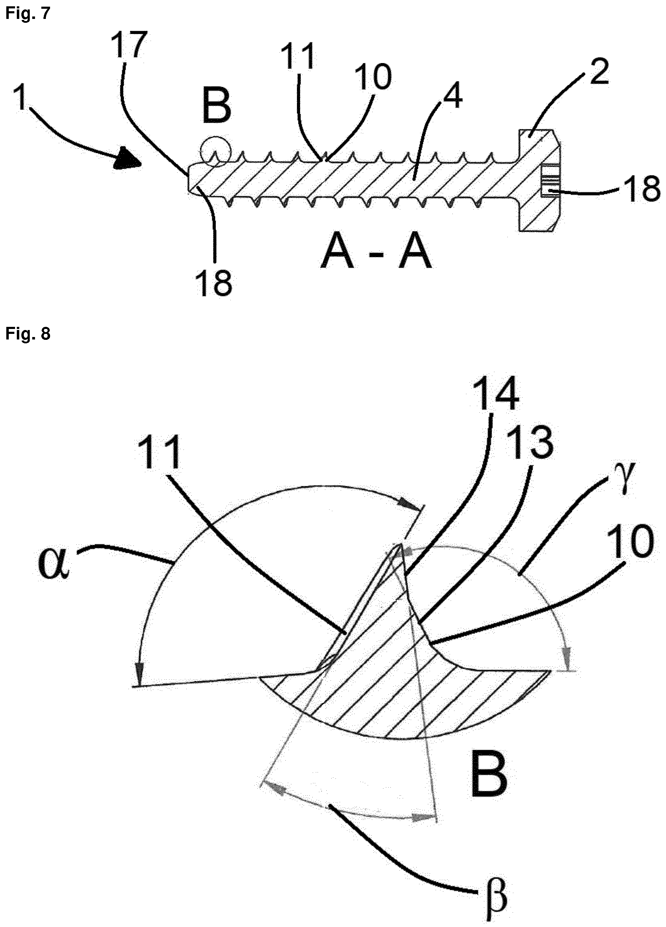

Fig. 7 zeigt eine Schnittansicht der Schraube 1 entlang der Linie A - A aus Fig. 6.

Fig. 8 zeigt ein Detailausschnitt B der Schraube 1 aus Fig. 6. Beispielsweise könnte Winkel α 124°, Winkel β 37° und Winkel Y 115° betragen.

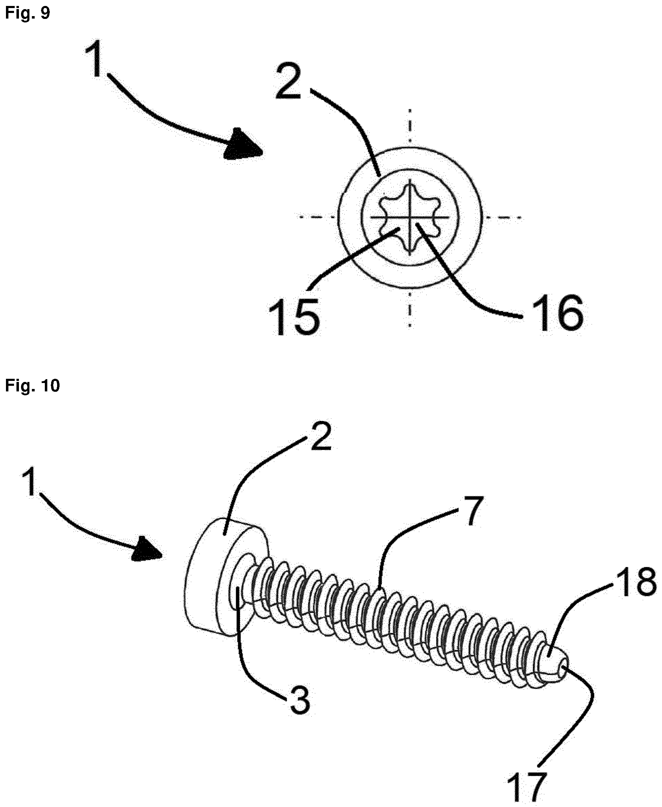

Fig. 9 zeigt eine Aufsicht auf einen Schraubenkopf der Schraube 1, gemäß Fig. 5.

Fig. 10 zeigt eine perspektivische Ansicht auf eine weitere Schraube 1 nach Stand der Technik.

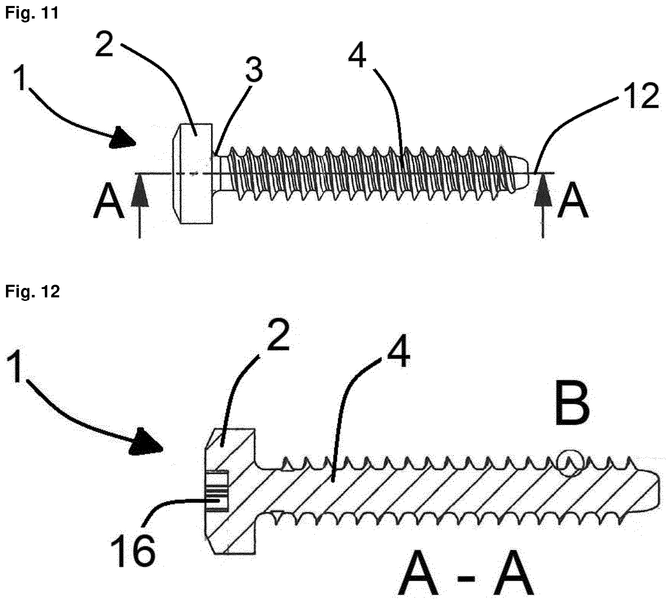

Fig. 11 zeigt eine Seitenansicht auf die Schraube 1, gemäß Fig. 10.

Fig. 12 zeigt eine Schnittansicht der Schraube 1 entlang der Linie A - A aus Fig. 11.

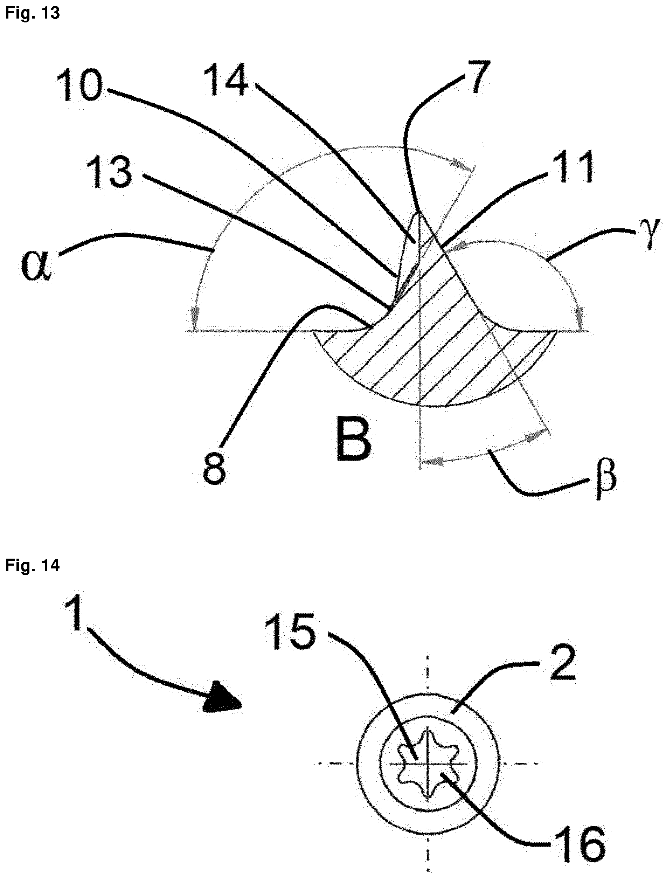

Fig. 13 zeigt ein Detailausschnitt B der Schraube 1 aus Fig. 12. Beispielsweise könnte Winkel α 120°, Winkel β 30° und Winkel Y' 120° betragen.

Fig. 14 zeigt eine Aufsicht auf einen Schraubenkopf der Schraube 1, gemäß Fig. 10.

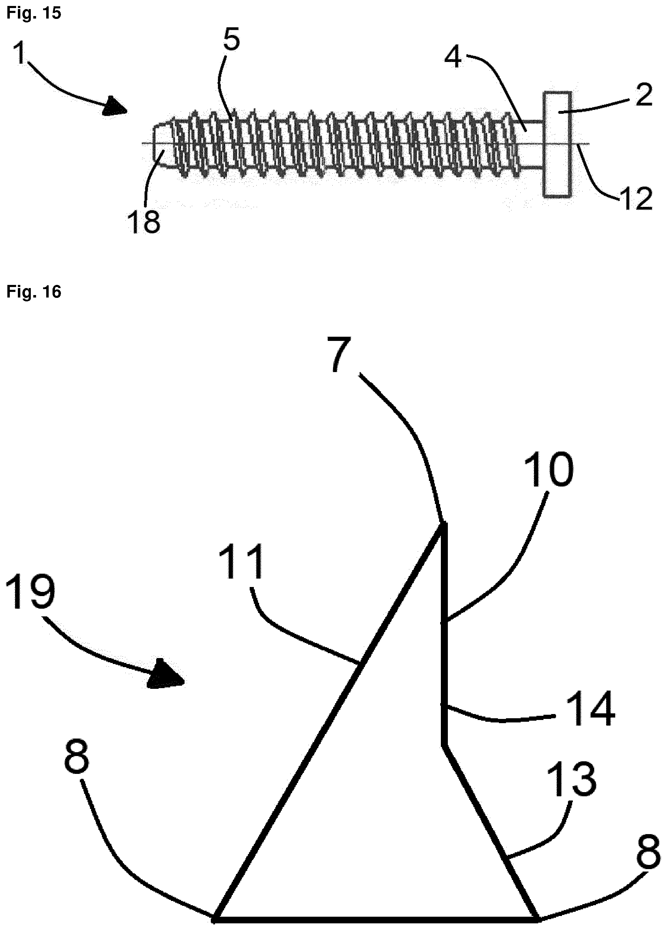

Fig. 15 zeigt eine Seitenansicht auf eine weitere Schraube 1 nach Stand der Technik.

Fig. 16 zeigt eine Skizze eines Ausführungsbeispiels eines Zahnflankenprofils 19 nach Stand der Technik.

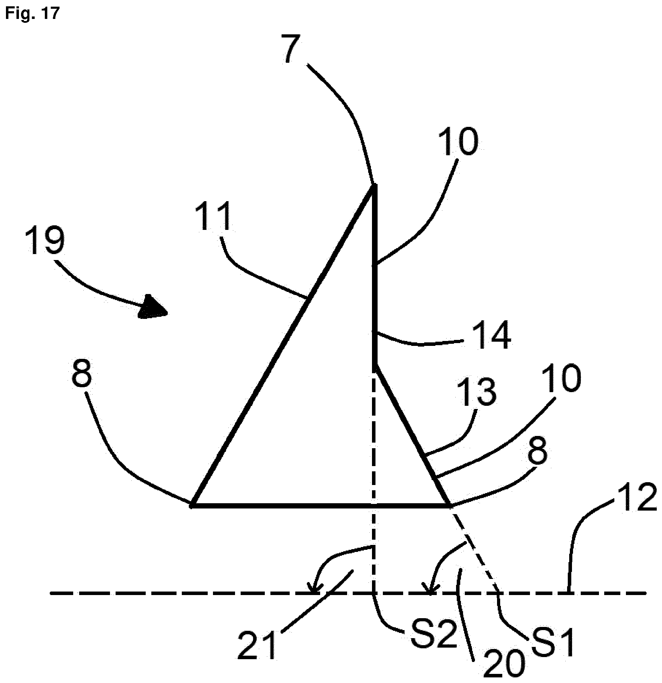

Fig. 17 zeigt eine Skizze des Ausführungsbeispiels eines Zahnflankenprofils 19, gemäß Fig. 16. Bei diesem weist eine dem ersten Ende des Schaftes 4 zugewandte Flanke 10 zwei unterschiedliche zwischen der Längsachse 12 und der Flanke 10 eingeschlossene Winkel auf, nämlich einen eingeschlossenen Winkel 20, der sich zwischen einer gedachten Verlängerung der im Gewindetal 8 befindlichen Flanke 10, die die Längsachse 12 im Scheitelpunkt S1 schneidet, und der Längsachse 12 ergibt, und einen eingeschlossenen Winkel 21, der sich zwischen einer gedachten Verlängerung der am Gewindeberg 7 befindlichen Flanke 10, die die Längsachse 12 im Scheitelpunkt S2 schneidet, und der Längsachse 12 ergibt. Der Winkel 20 ist flacher als der Winkel 21.

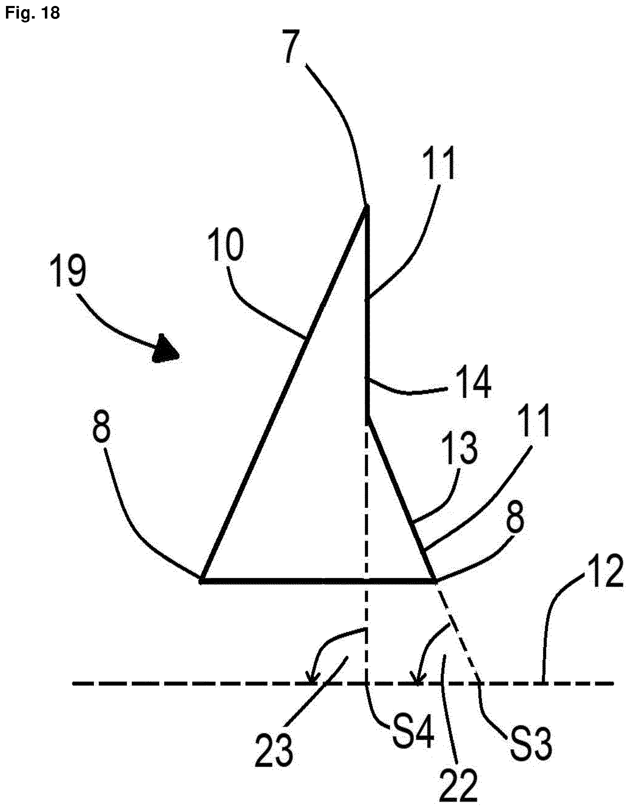

Fig. 18 zeigt eine Skizze eines weiteren Ausführungsbeispiels eines Zahnflankenprofils 19. Bei diesem weist eine dem ersten Ende des Schaftes 4 abgewandte Flanke 11 zwei unterschiedliche zwischen der Längsachse 12 und der Flanke 11 eingeschlossene Winkel auf, nämlich einen eingeschlossenen Winkel 22, der sich zwischen einer gedachten Verlängerung der im Gewindetal 8 befindlichen Flanke 11, die die Längsachse 12 im Scheitelpunkt S3 schneidet, und der Längsachse 12 ergibt, und einen eingeschlossenen Winkel 23, der sich zwischen einer gedachten Verlängerung der am Gewindeberg 7 befindlichen Flanke 11, die die Längsachse 12 im Scheitelpunkt S4 schneidet, und der Längsachse 12 ergibt. Der Winkel 22 ist flacher als der Winkel 23.

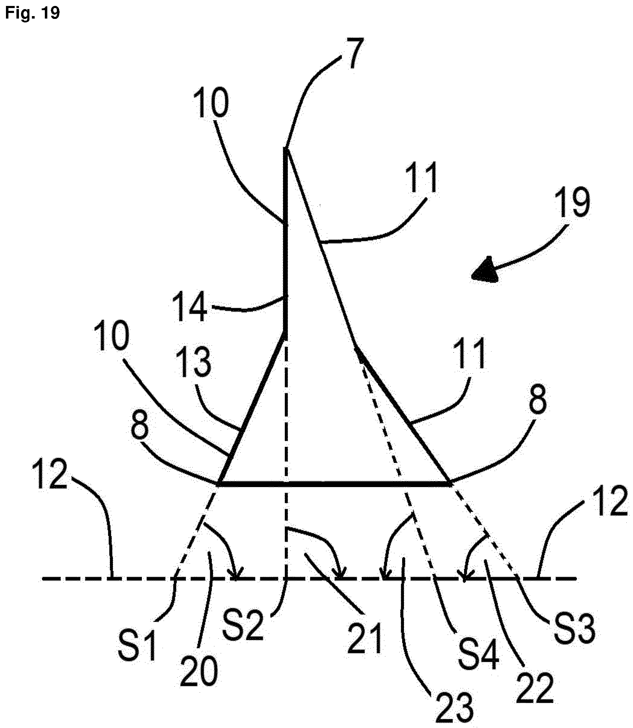

Fig. 19 zeigt eine Skizze eines weiteren Ausführungsbeispiels eines Zahnflankenprofils 19 einer erfindungsgemäßen Schraube 1. Bei diesem weist eine dem ersten Ende des Schaftes 4 zugewandte Flanke 10 zwei unterschiedliche zwischen der Längsachse 12 und der Flanke 10 eingeschlossene Winkel auf, nämlich einen eingeschlossenen Winkel 20, der sich zwischen einer gedachten Verlängerung der im Gewindetal 8 befindlichen Flanke 10, die die Längsachse 12 im Scheitelpunkt S1 schneidet, und der Längsachse 12 ergibt, und einen eingeschlossenen Winkel 21, der sich zwischen einer gedachten Verlängerung der am Gewindeberg 7 befindlichen Flanke 10, die die Längsachse 12 im Scheitelpunkt S2 schneidet, und der Längsachse 12 ergibt. Erfindungsgemäß ist der Winkel 20 flacher als der Winkel 21. Zusätzlich weist eine dem ersten Ende des Schaftes 4 abgewandte Flanke 11 zwei unterschiedliche zwischen der Längsachse 12 und der Flanke 11 eingeschlossene Winkel auf, nämlich einen eingeschlossenen Winkel 22, der sich zwischen einer gedachten Verlängerung der im Gewindetal 8 befindlichen Flanke 11, die die Längsachse 12 im Scheitelpunkt S3 schneidet, und der Längsachse 12 ergibt, und einen eingeschlossenen Winkel 23, der sich zwischen einer gedachten Verlängerung der am Gewindeberg 7 befindlichen Flanke 11, die die Längsachse 12 im Scheitelpunkt S4 schneidet, und der Längsachse 12 ergibt. Erfindungsgemäß ist der Winkel 22 flacher als der Winkel 23.

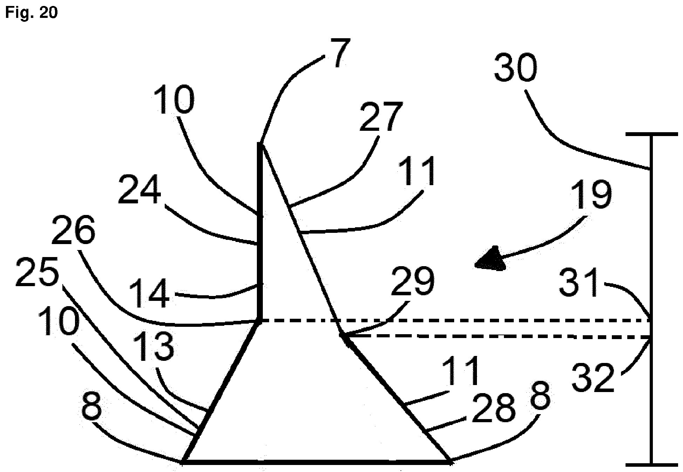

Fig. 20 zeigt eine Skizze des weiteren Ausführungsbeispiels eines Zahnflankenprofils 19 einer erfindungsgemäßen Schraube 1, gemäß Fig 19. Die dem ersten Ende 9 des Schaftes 4 zugewandte Flanke 10 weist am Gewindeberg 7 eine Fläche 24 auf, die an einem Übergang 26 in eine talseits angeordnete Fläche 25 übergeht. Zudem weist die dem ersten Ende 9 des Schaftes 4 abgewandte Flanke 11 am Gewindeberg 7 eine Fläche 27 aufweist, die an einem Übergang 29 in eine talseits angeordnete Fläche 28 übergeht. Skizzenhaft ist eine durch das Gewindetal 8 und den Gewindeberg 7 resultierende Gewindehöhe 30. An der Gewindehöhe 30 ist eine Höhe 31 des Übergangs 26 und eine Höhe 32 des Übergangs 29 angezeichnet. Denkbar wäre in einer anderen Ausführung auch, dass die Höhe 31 des Übergangs 26 und die Höhe 32 des Übergangs 29 auf der gleichen Höhe angeordnet sind bzw. dass die Höhe 31 des Übergangs 26 niedriger angeordnet ist, als die Höhe 32 des Übergangs 29. Denkbar wäre in einer anderen Ausführung auch, dass die Höhe 31 des Übergangs 26 und die Höhe 32 des Übergangs 29 im Gewindeverlauf keine konstante Höhe aufweisen.

Die Fläche 24, 25, 27 und 28 können je nach Ausführung unterschiedlich groß oder gleich groß sein.

Die erfindungsgemäßen Schraube 1 ist insbesondere in folgenden Einsatzgebieten einsetzbar: Medizintechnik, Lebensmittelindustrie, Elektrotechnik, Leichtbau, Wasser- und Abwassertechnik, Automation, Automobilindustrie, Luft- und Raumfahrttechnik, Modellbau und Gerätebau.

Bevorzugt handelt es sich bei der erfindungsgemäßen Schraube 1 um eine Schraube aus Kunststoff. Durch den Einsatz von Kunststoff bietet sich der Vorteil, dass eine Vielzahl von Farbvariationen möglich sind, wodurch die erfindungsgemäße Schraube 1 auch als Designelement einsetzen lassen kann. Zudem ist im Gegensatz zu Stahlschrauben eine thermische und/oder elektrische Isolation und/oder eine Gewichtsersparnis möglich. Des Weiteren sind Kunststoffschrauben korrosionsbeständig und weisen bei einer geeigneten Kunststoffauswahl eine chemische Beständigkeit auf. Außerdem können Kunststoffe zum Einsatz kommen, die speziellen Eigenschaften aufweisen, wodurch z.B. eine UL-Listung, eine Lebensmittelzulassung und/oder eine Trinkwasserzulassung erreicht wird.

### Bezugszahlenliste

- 1: Schraube
- 2: Schraubenkopf
- 3: Kragen
- 4: Schaft
- 5: Gewinde
- 6: Gewindegang
- 7: Gewindeberg
- 8: Gewindetal
- 9: Erstes Ende
- 10: Flanke
- 11: Flanke
- 12: Längsachse
- 13: Flacher eingeschlossener Winkel
- 14: Steiler eingeschlossener Winkel
- 15: Kopfantrieb
- 16: Innensechsrund
- 17: Zweites Ende
- 18: Zentrierungsschräge
- 19: Zahnflankenprofil
- 20: Winkel
- 21: Winkel
- 22: Winkel
- 23: Winkel
- 24: Fläche
- 25: Fläche
- 26: Übergang
- 27: Fläche
- 28: Fläche
- 29: Übergang
- 30: Gewindehöhe
- 31: Höhe
- 32: Höhe
- S1: Scheitelpunkt
- S2: Scheitelpunkt
- S3: Scheitelpunkt
- S4: Scheitelpunkt

## Patentansprüche

1. Schraube (1),
- mit einem eine Längsachse (12) aufweisenden Schaft (4), der ein erstes Ende (9) und ein zweites Ende (17) aufweist, wobei der Schaft (4) zumindest teilweise mindestens ein Gewinde (5) aufweist, wobei das Gewinde (5) einen Gewindegang (6) aufweist, der einen Gewindeberg (7), ein Gewindetal (8), eine durch den Gewindeberg (7) und das Gewindetal (8) resultierende Gewindetiefe, eine dem ersten Ende (9) des Schaftes (4) zugewandte Flanke (10) und eine dem ersten Ende (9) des Schaftes (4) abgewandte Flanke (11) aufweist,
wobei eine dem ersten Ende (9) des Schaftes (4) zugewandte Flanke (10) vom Gewindetal bis zum Gewindeberg (7) zwei unterschiedliche zwischen der Längsachse (12) und der Flanke (10) eingeschlossene Winkel (20, 21) aufweist, wobei der am Gewindeberg eingeschlossener Winkel (21) ein rechter Winkel ist, und
eine dem ersten Ende (9) des Schaftes (4) abgewandte Flanke (11) vom Gewindetal (8) bis zum Gewindeberg (7) zwei unterschiedliche zwischen der Längsachse (12) und der Flanke (11) eingeschlossene Winkel (22, 23) aufweist, wobei der im Gewindetal (8) eingeschlossene Winkel (20) einer dem ersten Ende (9) des Schaftes (4) zugewandten Flanke (10) flacher ist als der am Gewindeberg (7) eingeschlossene Winkel (21) und der im Gewindetal (8) eingeschlossene Winkel (22) einer dem ersten Ende (9) des Schaftes (4) abgewandten Flanke (11) flacher ist als der am Gewindeberg (7) eingeschlossene Winkel (23),
und
der Gewindeberg (7) mindestens eine Spitze aufweist.

2. Schraube (1), nach Anspruch 1,
**dadurch gekennzeichnet,**
**dass** der eingeschlossene Winkel einer Flanke (10, 11) im Gewindetal (8) höchstens 60° und am Gewindeberg (7) mindestens 61° beträgt.

3. Schraube (1), nach Anspruch 1 oder Anspruch 2,
**dadurch gekennzeichnet,**
**dass** das erste Ende (9) des Schaftes (4) einen Kopf aufweist.

4. Schraube (1), nach Anspruch 3,
**dadurch gekennzeichnet,**
**dass** der Kopf einen Kopfantrieb (15) aufweist.

5. Schraube (1), nach Anspruch 3 oder Anspruch 4,
**dadurch gekennzeichnet,**
**dass** der Kopf einen Kragen (3) aufweist.

6. Schraube (1), nach einem der vorhergehenden Ansprüche,
**dadurch gekennzeichnet,**
**dass** das zweite Ende (17) des Schaftes (4) einen Spitze, eine Zentrierungsschräge (18) oder einen Zapfen aufweist.

7. Schraube (1), nach einem der vorhergehenden Ansprüche,
**dadurch gekennzeichnet,**
**dass** mindestens ein Gewinde (5) eine Steigung zwischen 1,0 mm bis 4,0 mm aufweist.

8. Schraube (1), nach einem der vorhergehenden Ansprüche,
**dadurch gekennzeichnet,**
**dass** der Gewindeberg (7) mindestens eine Spitze und mindestens ein Plateau aufweist.

9. Schraube (1), nach einem der vorhergehenden Ansprüche,
**dadurch gekennzeichnet,**
**dass** die dem ersten Ende (9) des Schaftes (4) zugewandte Flanke (10) am Gewindeberg (7) eine Fläche (24) aufweist, die an einem Übergang (26) in eine talseits angeordnete Fläche (25) übergeht, und/oder die dem ersten Ende (9) des Schaftes (4) abgewandte Flanke (11) am Gewindeberg (7) eine Fläche (27) aufweist, die an einem Übergang (29) in eine talseits angeordnete Fläche (28) übergeht.

10. Schraube (1), nach Anspruch 9,
**dadurch gekennzeichnet,**
**dass** der Übergang (26) an der dem ersten Ende (9) des Schaftes (4) zugewandten Flanke (10) in einer Höhe (31) angeordnet ist, die maximal zwei Drittel einer durch das Gewindetal (8) und den Gewindeberg (7) resultierende Gewindehöhe (30) beträgt, und/oder der Übergang (29) an der dem ersten Ende (9) des Schaftes (4) abgewandten Flanke (11) in einer Höhe (32) angeordnet ist, die maximal zwei Drittel einer durch das Gewindetal (8) und den Gewindeberg (7) resultierende Gewindehöhe (30) beträgt.

11. Schraube (1), nach Anspruch 9 oder Anspruch 10,
**dadurch gekennzeichnet,**
**dass** der Übergang (26) an der dem ersten Ende (9) des Schaftes (4) zugewandten Flanke (10) höher angeordnet ist als der Übergang (29) an der dem ersten Ende (9) des Schaftes (4) abgewandten Flanke (11).

12. Schraube (1), nach einem der vorhergehenden Ansprüche,
**dadurch gekennzeichnet,**
**dass** die Schraube (1) aus Kunststoff ist.

13. Schraube (1), nach einem der vorhergehenden Ansprüche,
**dadurch gekennzeichnet,**
**dass** die Schraube (1) eine selbstschneidende Schraube (1) und/oder eine selbstfurchende Schraube (1) ist.

## Claims

1. A screw (1)
- provided with a shank (4) having a longitudinal axis (12) which has a first end (9) and a second end (17), said shank (4) having at least one thread (5) formed in at least a portion thereof, said thread (5) having a thread turn (6) which has a crest (7), a root (8), a thread depth resulting from the crest (7) and root (8) values, a first flank (10) facing towards the first end (9) of the shank (4), and a second flank (11) facing away from the first end (9) of the shank (4),
with a flank (10) facing towards the first end (9) of the shank (4) having, when considered from the root to the crest (7), two different angles (20, 21) included between the longitudinal axis (12) and the flank (10), with the included angle (21) located near the crest being a right angle,
and
with a flank (11) facing away from the first end (9) of the shank (4) having, when considered from the root (8) to the crest (7), two different angles (22, 23) included between the longitudinal axis (12) and the flank (11), with the included angle (20) located near the root (8) of a flank (10) facing towards the first end (9) of the shank (4) being flatter than the included angle (21) located near the crest (7), and with the included angle (22) located near the root (8) of a flank (11) facing away from the first end (9) of the shank (4) being flatter than the included angle (23) located near the crest (7),
and
the crest (7) having at least one peak.

2. . The screw (1) as claimed in claim 1,
**characterised in that**
the included angle of a flank (10, 11) near the root (8) is at most 60° and, near the crest (7), is at least 61°.

3. . The screw (1) as claimed in claim 1 or claim 2,
**characterised in that**
the first end (9) of the shank (4) has a head.

4. . The screw (1) as claimed in claim 3,
**characterised in that**
the head has a head drive (15).

5. . The screw (1) as claimed in claim 3 or claim 4,
**characterised in that**
the head has a collar (3).

6. . The screw (1) as claimed in any of the preceding claims,
**characterised in that**
the second end (17) of the shank (4) has a tip, a centring chamfer (18) or a peg.

7. . The screw (1) as claimed in any of the preceding claims,
**characterised in that**
at least one thread (5) has a pitch of between 1.0 mm and 4.0 mm.

8. . The screw (1) as claimed in any of the preceding claims,
**characterised in that**
the crest (7) has at least one peak and at least one plateau.

9. . The screw (1) as claimed in any of the preceding claims,
**characterised in that**
the flank (10) facing towards the first end (9) of the shank (4) has a surface (24) located near the crest (7) which, at a transition point (26), merges into a root-side surface (25), and/or the flank (11) facing away from the first end (9) of the shank (4) has a surface (27) located near the crest (7) which, at a transition point (29), merges into a root-side surface (28).

10. . The screw (1) as claimed in claim 9,
**characterised in that**
the transition point (26) on the flank (10) facing towards the first end (9) of the shank (4) is arranged at a height (31) which is at most two thirds of a thread height (30) resulting from the root (8) and crest (7) values, and/or the transition point (29) on the flank (11) facing away from the first end (9) of the shank (4) is arranged at a height (32) which is at most two thirds of a thread height (30) resulting from the root (8) and crest (7) values.

11. . The screw (1) as claimed in claim 9 or claim 10,
**characterised in that**
the transition point (26) on the flank (10) facing towards the first end (9) of the shank (4) is arranged at a greater height than the transition point (29) on the flank (11) facing away from the first end (9) of the shank (4).

12. . The screw (1) as claimed in any of the preceding claims,
**characterised in that**
the screw (1) is made of plastic material.

13. . The screw (1) as claimed in any of the preceding claims,
**characterised in that**
the screw (1) is a thread-cutting screw (1) and/or a thread-forming screw (1).

## Revendications

1. Vis (1),
- avec un corps (4) présentant un axe longitudinal (12) qui possède une première extrémité (9) et une deuxième extrémité (17), le corps (4) présentant, au moins en partie, au moins un filetage (5), le filetage (5) présentant un tour de filet (6) avec un sommet de filet (7), un fond de filet (8) et une profondeur de filet induite par le sommet de filet (7) et le fond de filet (8), un flanc (10) tourné vers la première extrémité (9) du corps (4) et un flanc (11) opposé à la première extrémité (9) du corps (4),
un flanc (10) tourné vers la première extrémité (9) du corps (4) présentant, depuis le fond de filet jusqu'au sommet de filet (7), deux angles (20, 21) différents inclus entre l'axe longitudinal (12) et le flanc (10), l'angle (21) inclus au niveau du sommet de filet étant un angle droit,
et
un flanc (11) opposé à la première extrémité (9) du corps (4) présentant, depuis le fond de filet (8) jusqu'au sommet de filet (7), deux angles (22, 23) différents inclus entre l'axe longitudinal (12) et le flanc (11), l'angle (20) inclus au niveau du fond de filet (8) qui est formé par un flanc (10) tourné vers la première extrémité (9) du corps (4) étant plus plat que l'angle (21) inclus au niveau du sommet de filet (7), et l'angle inclus au niveau du fond de filet (8) qui est formé par un flanc (11) opposé à la première extrémité (9) du corps (4) étant plus plat que l'angle (23) inclus au niveau du sommet de filet (7),
et
le sommet de filet (7) présentant au moins une crête.

2. Vis (1) selon la revendication 1,
**caractérisée en ce que**
l'angle inclus formé par un flanc (10, 11) au niveau du fond de filet (8) ne dépasse pas 60° et celui formé au niveau du sommet de filet (7) est d'au moins 61°.

3. Vis (1) selon la revendication 1 ou selon la revendication 2,
**caractérisée en ce que**
la première extrémité (9) du corps (4) présente une tête.

4. Vis (1) selon la revendication 3,
**caractérisée en ce que**
la tête présente une empreinte (15).

5. Vis (1) selon la revendication 3 ou selon la revendication 4,
**caractérisée en ce que**
la tête présente un col (3).

6. Vis (1) selon l'une quelconque des revendications précédentes,
**caractérisée en ce que**
la deuxième extrémité (17) du corps (4) présente une pointe, une inclinaison de centrage (18) ou un téton.

7. Vis (1) selon l'une quelconque des revendications précédentes,
**caractérisée en ce que**
au moins un filetage (5) présente un pas de filet compris entre 1,0 mm et 4,0 mm.

8. Vis (1) selon l'une quelconque des revendications précédentes,
**caractérisée en ce que**
le sommet de filet (7) présente au moins une crête et au moins un plateau.

9. Vis (1) selon l'une quelconque des revendications précédentes,
**caractérisée en ce que**
le flanc (10) tourné vers la première extrémité (9) du corps (4) qui est formé au niveau du sommet de filet (7) présente une surface (24) qui est suivie, au niveau d'une transition (26), par une surface (25) disposée côté fond, et/ou que le flanc (11) opposé à la première extrémité (9) du corps (4) qui est formé au niveau du sommet de filet (7) présente une surface (27) qui est suivie, au niveau d'une transition (29), par une surface (28) disposée côté fond.

10. Vis (1) selon la revendication 9,
**caractérisée en ce que**
la transition (26) formée au niveau du flanc (10) tourné vers la première extrémité (9) du corps (4) est disposée à une hauteur (31) qui représente au plus deux tiers d'une hauteur de filet (30) induite par le fond de filet (8) et le sommet de filet (7), et/ou que la transition (29) formée au niveau du flanc (11) opposé à la première extrémité (9) du corps (4) est disposée à une hauteur (32) qui représente au plus deux tiers d'une hauteur de filet (30) induite par le fond de filet (8) et le sommet de filet (7).

11. Vis (1) selon la revendication 9 ou selon la revendication 10,
**caractérisée en ce que**
la transition (26) formée au niveau du flanc (10) tourné vers la première extrémité (9) du corps (4) est disposée à une hauteur supérieure à la transition (29) formée au niveau du flanc (11) opposé à la première extrémité (9) du corps (4).

12. Vis (1) selon l'une quelconque des revendications précédentes,
**caractérisée en ce que**
la vis (1) est en matière plastique.

13. Vis (1) selon l'une quelconque des revendications précédentes,
**caractérisée en ce que**
la vis (1) est une vis (1) autotaraudeuse à coupe et/ou une vis (1) autotaraudeuse à filetage formé.
